# EUROPEAN PATENT APPLICATION

(11) **EP 2 026 153 A1**
(43) Date of publication of application: **18.02.2009**
(21) Application number: 08162344.9
(22) Date of filing: 13.08.2008
(51) Int. Cl.: G05B 19/4065, G05B 23/02, G08C 17/02, G01M 13/04

(54) **Wireless preprocessing sensor**

(30) Priority: 17.08.2007 US 893744
(71) Applicant: Honeywell International Inc., Morristown, NJ 07962 (US)
(72) Inventor: Sadana, Rajat, Phoenix, AZ 85041 (US)
(74) Representative: Haley, Stephen

(57) **Abstract**

A system and method for a wireless preprocessing sensor are provided. A process controller (116) is operable to communicate wirelessly. The wireless preprocessing sensor (104) includes a sensor (108), a processor (106) and a wireless communication interface (110). The sensor is operable to measure a speed of a rotating mechanism (102). The processor is operable to receive measurements of speed from the sensor, analyze a plurality of speed measurements to produce information representing a characteristic of the speed of the rotating mechanism, and send the information to the process controller via the wireless communication interface.

## Description

### TECHNICAL FIELD

This disclosure relates generally to wireless sensors and more specifically to a wireless preprocessing sensor.

### BACKGROUND

A process plant is a complex, multifaceted entity, a structured organization of physical elements, operated for economic and other criteria that are often industry-specific. A process plant has a number of different stakeholders who can affect and/or are affected by its operation. Critical to the operation of many process plants today is a process control system, which ensures that appropriate parameters are measured and actions taken, plant personnel are kept informed, abnormal situations are identified and addressed, and business processes are integrated. Automation, monitoring, and control systems are employed in diverse applications, such as residential, shipping, warehousing, refining and petrochemical plants, the petroleum and natural gas supply chain, pulp and paper manufacturing, electrical power generation, chemical production, food production, wastewater treatment, discrete product manufacturing, cable-laying ships, tunnel ventilation control, and mining operations.

In many automation, monitoring, and control applications the cost of running wires from nodes such as sensors, actuators and user interfaces to an analysis system limits the number and location of such nodes initially deployed. Cost and difficulty of wiring installation may also limit the deployment of additional nodes in an already-functioning system. The recent development of wireless communication technologies, such as Bluetooth, IEEE® 802.11, RFID and others, promises a solution to such wiring costs, but not without introducing new challenges to the reliability and security of an automation, monitoring, or control system.

### SUMMARY

This disclosure provides a wireless preprocessing sensor system and method.

In a first embodiment, an apparatus includes a sensor, a processor and a wireless communication interface. The sensor is operable to measure a vibration of a rotating mechanism. The processor is operable to receive measurements of vibration from the sensor, analyze a plurality of vibration measurements to produce information representing a characteristic of the vibration of the rotating mechanism, and send the information to an analysis application via the wireless communication interface.

In a second embodiment, a system includes an analysis application and a wireless device. The process controller is operable to communicate wirelessly. The wireless device includes a sensor, a processor and a wireless communication interface. The sensor is operable to measure a vibration of a rotating mechanism. The processor is operable to receive measurements of vibration from the sensor, analyze a plurality of vibration measurements to produce information representing a characteristic of the vibration of the rotating mechanism, and send the information to the analysis application via the wireless communication interface.

In a third embodiment, a method includes sensing a vibration of a rotating mechanism. The method also includes analyzing a plurality of vibration measurements to produce information representing a characteristic of the vibration of a rotating mechanism. The method further includes wirelessly sending the information to an analysis application.

Other technical features may be readily apparent to one skilled in the art from the following figures, descriptions, and claims.

### BRIEF DESCRIPTION OF THE DRAWINGS

For a more complete understanding of this disclosure, reference is now made to the following description, taken in conjunction with the accompanying drawings, in which:

FIGURE 1 illustrates an example wireless preprocessing sensor system according to one embodiment of this disclosure; and

FIGURE 2 illustrates example actions performed by a wireless preprocessing sensor according to one embodiment of this disclosure.

### DETAILED DESCRIPTION

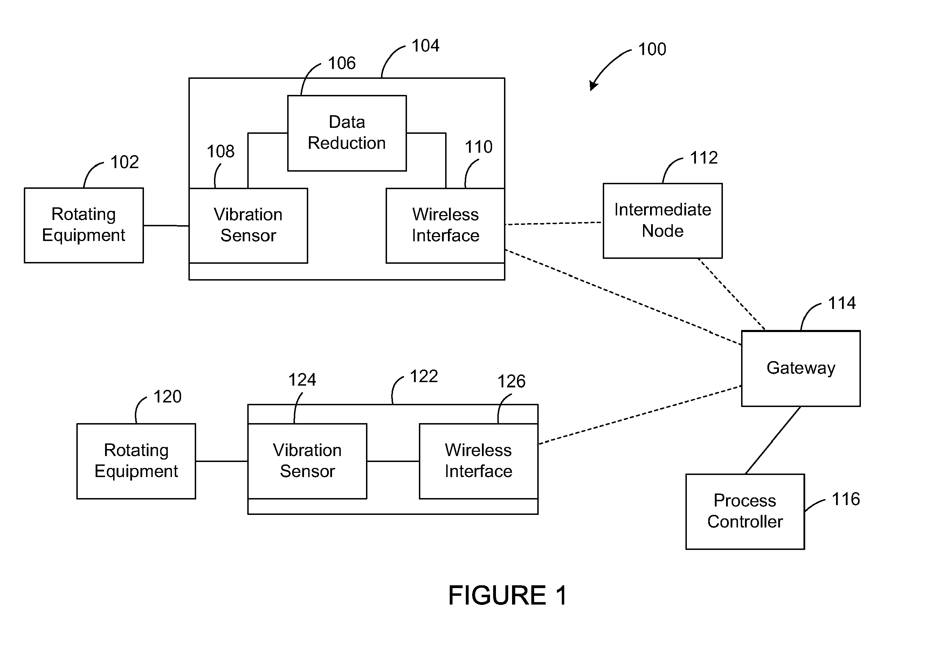

FIGURE 1 illustrates an example wireless preprocessing sensor system 100 according to one embodiment of this disclosure. The embodiment of the wireless preprocessing sensor system 100 shown in FIGURE 1 is for illustration only. Other embodiments of the wireless preprocessing sensor system 100 could be used without departing from the scope of this disclosure.

In this example embodiment, the wireless preprocessing sensor system 100 is depicted as a process control application. In other embodiments, however, the system 100 may be used in any suitable type of automation, monitoring or control application. For example, the wireless preprocessing sensor system 100 could be used in a building, an industrial facility or an urban environment. Although the wireless preprocessing sensor system 100 may be described below as being used in an industrial facility, the wireless preprocessing sensor system 100 could be used in any of these or other environments.

In addition, the wireless preprocessing sensor system 100 could use any suitable wireless signals to communicate. Although the wireless preprocessing sensor system 100 may be described below as using radio frequency (RF) signals to communicate, the wireless preprocessing sensor system 100 could use any other or additional type of wireless signal.

As shown in FIGURE 1, the wireless security sensor system 100 includes a process controller 116 coupled by a communication link to a wireless gateway 114. The wireless gateway 114 may be in wireless communication with an intermediate node 112 and wireless devices 104 and 122.

The wireless device 122 is a vibration sensor for a piece 120 of rotating equipment. The wireless device 122 includes a vibration sensor 124 that senses a vibration of the rotating equipment 120. The vibration sensor 124 is coupled to a wireless interface 126. As the vibration sensor 124 acquires samples of the vibration of the rotating equipment 120, the wireless interface 126 wirelessly sends the samples to the process controller 116 via the gateway 114.

In some process control systems, the process controller 116 may perform analysis of data reported by the wireless device 122. Where the process controller 116 requires a measurement of a characteristic of the rotating equipment 120, the process controller 116 may perform a differentiation or other analysis operation on the vibration measurements reported by the wireless device 122. Such an arrangement of functionality, however, places a high demand on the communication bandwidth of the communication links between the wireless device 122 and the process controller 116. Where increased accuracy or resolution is required in the analysis of measured process data, an increased amount of data must be sent via the links. As a result, bandwidth limitations of one or more of the communication links may place a limit on the accuracy or resolution of process control measurement and analysis.

Wireless device 104 avoids such constraints, in accordance with one embodiment of this disclosure. The wireless device includes a vibration sensor 108 that measures a vibration (or jitter) of a piece 102 of rotating equipment. The vibration sensor 108 may be an accelerometer, a vibration sensor, an acoustic sensor or other suitable device for measuring vibration or jitter. A data reduction processor 106 calculates one or more characteristics of the vibration of the rotating equipment 102 and sends the calculated characteristic to the process controller 116 via a wireless interface 110. Because the wireless device 104 transmits a smaller volume of data than the wireless device 122, the wireless device 104 will use a smaller amount of the communication bandwidth of the system 100 (particularly the wireless communication bandwidth) and will be able to provide higher accuracy and resolution and more timely analysis data than the wireless device 122.

The wireless device 104 may be able to operate as part of a mesh wireless communication system by sending analysis data to the process controller 116 via one or more intermediate nodes simultaneously. In FIGURE 1 the intermediate nodes are the gateway 114 and an intermediate node 112. In other embodiments, two wireless paths from the wireless device 104 to the gateway 114 may pass through separate intermediate nodes. In this way, should one of the wireless links between the wireless device 104 and the process controller 116 fail, the analysis data may still get through to the process controller 116 via another wireless link.

The data reduction processor 106 may perform one or more of several different data analyses to calculate one or more characteristics of the vibration of the rotating equipment 102. Examples of the types of data analyses performed by a wireless device 104 embodying this disclosure are given below. It will be understood that other wireless devices embodying the present disclosure may additionally or alternatively perform other types of data analyses.

The data reduction processor 106 may perform a Fast Fourier Transform (FFT) on the measurements of vibration from the vibration sensor 108 in order to convert the data from the time domain to the frequency domain. The processor 106 may then send the FFT values at significant frequency locations such as 1, 2 and 4 times the rotation speed of the rotating equipment 102 to the process controller 116. (The rotation speed of the rotating equipment 102 may be notated herein by 1X RPM)

The data reduction processor 106 may calculate from the FFT values 'in band' and 'out of band' energy to send to the process controller 116. 'In band' energy may be defined as the total energy in the band from 0 RPM to 1X RPM. 'Out of band' energy may be defined as the total energy in a band above the rotation speed of the rotating equipment 102, for example 1X RPM to 50X RPM.

The data reduction processor 106 may perform envelope detection on the vibration measurements from the vibration sensor 108 and calculate the energy in a predetermined frequency band to send to the process controller 116. For example, energy in the band above 10X RPM may permit the process controller 116 to detect increasing bearing wear in the rotating equipment 102.

The data reduction processor 106 may calculate more traditional statistical measures of the vibration of the rotating equipment, such as Root Mean Square and peak values.

In some embodiments of this disclosure, the data reduction processor 106 may perform all of these data analyses and send the resulting information representing characteristics of the vibration of the rotating equipment 102 to the process controller 116. In other embodiments, the process controller 116 may wirelessly send a configuration message to the wireless device 104 specifying one or more analysis functions to perform. In response to this analysis definition message, the data reduction processor may perform only the specified analyses. The program code to perform a specified analysis functions may already be present in the wireless device 104 or may be provided as part of the configuration message received from the process controller 116.

In other embodiments of this disclosure, the data reduction processor 106 may monitor the results of the data analysis functions it performs and compare the results to predetermined values or ranges that represent alarm conditions. If the result of a data analysis function matches an alarm condition, the processor 106 may send an alarm message to the process controller 116 identifying the alarm condition that has been matched. In still other embodiments, the process controller 116 may send an alarm configuration message to the wireless device 104 defining an alarm condition that the processor 106 will subsequently monitor for.

In the embodiment shown in FIGURE 1, it is process controller 116 that receives and utilizes messages from wireless devices 104 and 122. However, it will be understood that in other embodiments, other sorts of analysis applications may receive and utilize messages from wireless devices 104 and 122 without performing process control functions. Furthermore, while the vibration sensor 108, data reduction processor 106 and wireless interface 110 are shown as separate elements of wireless device 104, in other embodiments any or all of these elements may be performed by a single circuit, by other groupings of functionality into circuits, and may be implemented in a single semiconductor chip or chip set.

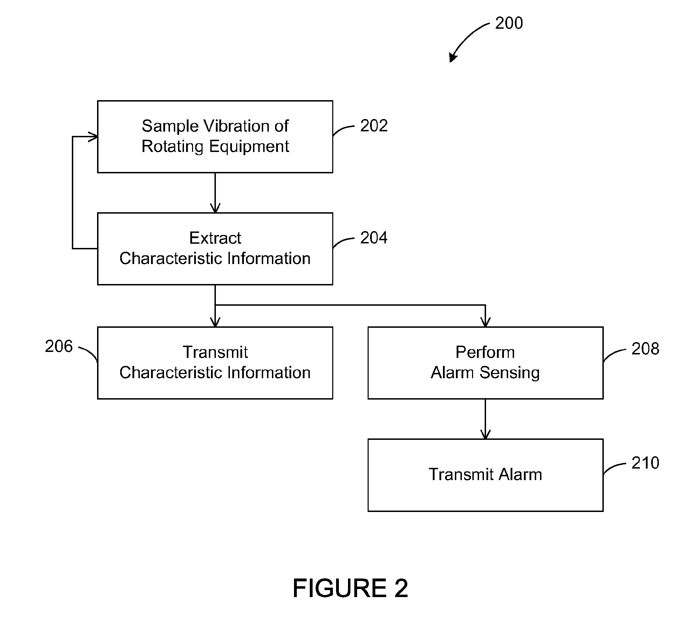

FIGURE 2 illustrates example actions 200 that may be performed by a wireless preprocessing sensor 104 according to one embodiment of this disclosure. The embodiment of the process 200 shown in FIGURE 2 is for illustration only. Other embodiments of the process 200 could be used without departing from the scope of this disclosure.

In step 202, the sensor 104 measures a vibration of the rotating equipment 102 and in step 204 analyzes that measurement, and possibly previous measurements, to produce characteristic information regarding the vibration of the rotating equipment 102. The sensor 104 may then repeat step 102, in order to continuously repeat the cycle of measuring and analyzing vibration.

Having generated information that is characteristic of the vibration of the rotating equipment 102, the sensor may then wirelessly send that information to the process controller 116 in step 206. Simultaneously, in step 208, the sensor 104 may compare the characteristic information to one or more alarm conditions and, if an alarm condition is met, send an alarm message to the process controller 116 in step 210.

In some embodiments, various functions described above are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory.

It may be advantageous to set forth definitions of certain words and phrases used throughout this patent document. The term "couple" and its derivatives refer to any direct or indirect communication between two or more elements, whether or not those elements are in physical contact with one another. The terms "application" and "program" refer to one or more computer programs, software components, sets of instructions, procedures, functions, objects, classes, instances, related data, or a portion thereof adapted for implementation in a suitable computer code (including source code, object code, or executable code). The terms "send," "transmit," "receive," and "communicate," as well as derivatives thereof, encompass both direct and indirect communication. The terms "include" and "comprise," as well as derivatives thereof, mean inclusion without limitation. The term "or" is inclusive, meaning and/or. The phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like. The term "controller" means any device, system, or part thereof that controls at least one operation. A controller may be implemented in hardware, firmware, software, or some combination of at least two of the same. The functionality associated with any particular controller may be centralized or distributed, whether locally or remotely.

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of the invention, as defined by the following claims.

## Claims

1. An apparatus comprising:
a sensor, operable to measure a speed of a rotating mechanism;
a processor, operable to receive measurements of speed from the sensor; and
a wireless communication interface,
wherein the processor is further operable to analyze a plurality of speed measurements to produce information representing a characteristic of the speed of the rotating mechanism and send the information to a process controller via a plurality of intermediate wireless nodes.

2. The apparatus of Claim 1, wherein the processor is further operable to:
receive an alarm definition message via the wireless communication interface, the alarm definition message defining a predefined alarm criterion; and
send an alarm message to the process controller via the wireless communication interface in response to the information matching the predefined alarm criterion.

3. The apparatus of Claim 1, wherein the processor is operable to analyze the information by performing at least one of a Fast Fourier Transform, an envelope detection procedure, and a statistical analysis.

4. The apparatus of Claim 1, wherein the processor is operable to:
receive an analysis definition message via the wireless communication interface, the analysis definition message specifying an analysis to perform; and
perform the specified analysis of the speed measurements.

5. A system, comprising:
a process controller, operable to communicate wirelessly;
a plurality of intermediate wireless nodes; and
a wireless device, comprising:
a sensor, operable to measure a speed of a rotating mechanism;
a processor, operable to receive measurements of speed from the sensor; and
a wireless communication interface,
wherein the processor is further operable to analyze a plurality of speed measurements to produce information representing a characteristic of the speed of the rotating mechanism and send the information to the process controller via two or more of the plurality of intermediate wireless nodes.

6. The system of Claim 5, wherein the processor is further operable to receive a configuration message from the process controller via the wireless communication interface.

7. The system of Claim 5, wherein the processor is further operable to:
receive an alarm definition message wirelessly from the process controller, the alarm definition message defining an alarm criterion; and
send an alarm message to the process controller via the wireless communication interface in response to the information matching the alarm criterion.

8. A method comprising:
sensing a speed of a rotating mechanism;
analyzing a plurality of speed measurements to produce information representing a characteristic of the speed of a rotating mechanism; and
wirelessly sending the information to a process controller via a plurality of intermediate wireless nodes.

9. The method of Claim 8, further comprising:
wirelessly receiving an alarm definition message from the process controller, wherein the alarm definition message defines an alarm criterion; and
wirelessly sending an alarm message to the process controller in response to the information matching the alarm criterion.

10. The method of Claim 8, wherein analyzing a plurality of speed measurements further comprises performing at least one of a Fast Fourier Transform, an envelope detection procedure, and a statistical analysis.
